# EUROPEAN PATENT SPECIFICATION

(11) **EP 4 299 376 B1**
(45) Date of publication and mention of the grant of the patent: **16.04.2025**
(21) Application number: 23182158.8
(22) Date of filing: 28.06.2023
(51) Int. Cl.: B60Q 1/26, F21V 17/10, F16B 47/00, F21V 21/092, F21W 111/00

(54) **LUMINOUS BEACON ASSEMBLY**
LEUCHTBAKENANORDNUNG
ENSEMBLE DE BALISE LUMINEUSE

(30) Priority: 01.07.2022 ES 202231118 U
(43) Date of publication of application: 03.01.2024
(73) Proprietor: Atressa Global Corporation, S.L., 48160 Derio (ES)
(72) Inventor: BASTERRECHEA SANCHEZ, CESAR, 48160 DERIO (VIZCAYA) (ES)
(74) Representative: Isern Patentes y Marcas S.L.

(56) References cited:
- WO-A1-2015/054979
- CN-U- 213 896 863
- DE-U- 1 925 461
- DE-U1- 8 100 216
- US-A- 2 963 256

## Description

### Technical field

The present invention can be included within the field of signalling, more specifically, light signalling by means of light. More specifically, the object of the invention relates to a luminous beacon assembly, which has a luminous beacon and a suction cup-type fastening.

### Background

Luminous beacons intended, for example, to signal the presence of vehicles involved in accidents on a road are known. In one particular case, the beacons are stored inside the vehicle so that, in the event of an incident, they can be placed on the roof of said vehicle and luminously signal the presence of said vehicle, as well as warn of a traffic incident. Beacons of this type have a casing with magnetic properties so that they can be securely fastened to the roof of the signalled vehicle, and be subsequently removed when their function is no longer required.

When the roof of the vehicle (in general, the surface on which the beacon is to be placed) does not have magnetic properties (e.g., because it is made of a non-magnetic metal, such as aluminium, or because it is made of glass or a polymeric material, etc.), suction cup-based solutions are used, in which the casing of the beacon is fastened to several perimeter suction cups by means of screwed joints. As a result, on the one hand, the dimensions of the "beacon + suction cups" assembly increase substantially and, on the other hand, the use of screws and tools to fasten the suction cups to the beacon in the factory becomes necessary. Furthermore, the described configuration prevents a user from using the beacons for magnetic surfaces on other surfaces.

WO 2015/054979 A1 discloses an arrangement combining the attractive force of a magnet and the force of a suction cup to firmly mount a beacon onto a vehicle body. The suction cup holder is also mounted to the beacon by screws.

### Description of the invention

The present invention solves the aforementioned drawbacks by means of a luminous beacon assembly according to the main claim. Other optional advantageous embodiments are the object of the dependent claims.

The luminous beacon assembly of the invention provides the possibility of fastening a luminous beacon to a non-magnetic (or non-magnetisable) surface which, in particular, makes it possible to recover luminous beacons initially marketed for use through magnetic fastening, all of this without substantially increasing storage space needs, in particular, the perimeter dimensions, and without requiring the use of tools to attach the beacon on a fastening by means of suction cup(s).

### Brief description of the figures

The foregoing and other advantages and features will be more fully understood from the following detailed description of exemplary embodiments with reference to the accompanying drawings, which should be considered by way of illustration and not limitation, wherein:

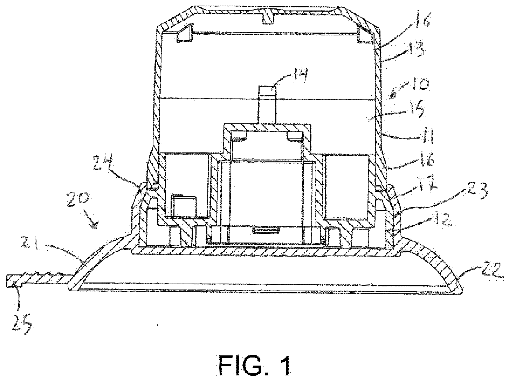

Figure 1 represents an elevation sectional view of the beacon assembly of the invention.

### Detailed description of an exemplary embodiment

A detailed description of a preferred exemplary embodiment of the luminous beacon assembly of the invention is provided below, with the aid of figure 1 mentioned above.

The luminous beacon assembly of the invention comprises a luminous beacon (10) and a suction cup-type fastening (20), intended to house the beacon (10), as explained below.

The beacon (10) has a casing (11), with a bottom base (12) and a top portion (13), wherein the casing (11) houses lighting means (14) and a battery (not shown), which powers the lighting means (14). The top portion (13) is transparent or translucent, to allow the light emitted by the lighting means (14) to be seen.

The casing (11) can also house control means (not shown) to control the operation of the lighting means (14). The lighting means (14) may include one or more LEDs (not shown), controlled by the control means, to light up in one or more predetermined colours, for example, according to a predefined sequence. Alternatively, or additionally, the top portion (13) of the casing (11) can be coloured, such as by zones; for example, with a first band (15) of orange or yellow, located between two second bands (16) of red.

The base (12) of the casing (11), for its part, is preferably cylindrical, and even more preferably has a circular section. It can also have other types of sections, such as a polygonal section, defining a faceted beacon.

The base (12) can be magnetised, to make it possible to incorporate in the present beacon assembly a beacon (10) initially configured to be fastened magnetically.

Advantageously, the base (12) has a bevelled narrowing (17), which serves as a transition from the base (12) to the top portion (13).

The beacon (10) can preferably include a positioning system (not shown), such as GPS, as well as a communication system (not shown), powered by the battery and controlled by the control means, to communicate with Emergency Services (Department of Traffic, Police, etc.), broadcasting the position of the beacon (10). The communication system is preferably configured to communicate and broadcast autonomously, without relying on an external telephone or data line, such as those of a user's mobile phone.

For its part, the fastening (20) is intended to, on the one hand, house the beacon (10) and, on the other hand, provide a suction cup fastening, as explained below.

For this, the fastening (20) includes a fastening body (21), with a suction cup (22) at its bottom portion, to secure the fastening (20) to a desired surface, such as the roof of a car, for example, and particularly if it is a sunroof (in general, a roof devoid of magnetic properties).

Likewise, the fastening body (21) comprises a top housing (23) configured to house and retain the base (12) of the beacon (10). In particular, the housing (23) corresponds in shape to the base (12), wherein the housing (23) has a bevelled narrowing (24) corresponding to the narrowing (17) of the base (12). Additionally, the housing (23) is made of a deformable material, such as rubber or some functionally equivalent polymer, such that in order to house and retain the beacon (10) in the housing (23), by means of a form closure, it is enough to force insertion of the bottom portion of the base (12), of a larger size, through the narrowing defined in the housing (23).

Preferably, the fastening body (21) is monolithic, so that the suction cup (22) of the bottom portion and the housing (23) of the top portion are integrated into the same body. Also preferably, the suction cup (22) and the housing (23) are configured coaxially, as well as coaxially with the base (12) of the beacon (10).

The described luminous beacon assembly makes it possible to first fasten the suction cup (22) of the fastening body (21) to the desired surface, and then house the beacon (10) in the housing (23) of the fastening body (21), as well as, alternatively and more preferably, fasten the suction cup (22) on the desired surface, with the beacon (10) already housed and retained in the housing (23).

To attach the fastening (20), with or without the beacon (10), the fastening body (21) is pressed downwards to generate a vacuum, according to the normal operation of any suction cup (22).

To improve adherence and removal of the luminous beacon assembly, or of the fastening (20), the suction cup (22) preferably protrudes transversely (seen in plan view) with respect to the housing (23). In particular, the suction cup (22) can include a tab (25), preferably on its perimeter portion, to lift upwards and break the vacuum.

### List of elements:

- 10: Beacon
- 11: Casing
- 12: Base
- 13: Top portion
- 14: Lighting means
- 15: First band
- 16: Second bands
- 17: Narrowing
- 20: Fastening
- 21: Fastening body
- 22: Suction cup
- 23: Housing
- 24: Narrowing
- 25: Tab

## Claims

1. A luminous beacon assembly, **characterised in that** it comprises:
- a luminous beacon (10), which includes a casing (11) with a top portion (13) and a bottom base (12), and with a bevelled narrowing (17) from the base (12) to the top portion (13); and
- a suction cup-type fastening (20), intended to house and retain the beacon (10), and comprising a fastening body (21), with a suction cup (22) at its bottom portion, to secure the fastening (20) to a desired surface, the fastening body (21) further comprising a top housing (23) at its top portion, to house and retain the base (12); wherein the housing (23) has a shape that corresponds to the base (12), and the housing (23) includes a bevelled narrowing (24) corresponding to the narrowing (17) of the base (12); the housing (23) being made of a deformable material, which allows the base (12) of the beacon (10) to be retained through a form closure, forcing an insertion of the base (12), of a larger size, through of the narrowing (24) defined in the housing (23).

2. The luminous beacon assembly according to claim 1, **characterised in that** the fastening body (21) is monolithic, the suction cup (22) of the bottom portion and the housing (23) of the top portion being integrated into one same body.

3. The luminous beacon assembly according to any of claims 1-2, **characterised in that** the suction cup (22) and the housing (23) are configured coaxially, as well as coaxially with the base (12) of the beacon (10).

4. The luminous beacon assembly according to any of claims 1-3, **characterised in that** the base (12) is magnetised.

5. The luminous beacon assembly according to any of claims 1-4, **characterised in that** the suction cup (22) protrudes transversely, that is, when viewed in plan view, with respect to the housing (23).

6. The luminous beacon assembly according to any of claims 1-5, **characterised in that** the suction cup (22) additionally includes a tab (25), to lift upwards and separate the suction cup (22) from the desired surface.

## Patentansprüche

1. Leuchtbakenanordnung, **dadurch gekennzeichnet, dass** sie umfasst:
- eine Leuchtbake (10), die ein Gehäuse (11) mit einem oberen Abschnitt (13) und einer unteren Basis (12) und mit einer abgeschrägten Verengung (17) von der Basis (12) zu dem oberen Abschnitt (13) einschließt; und
- eine saugnapfartige Befestigung (20), die dazu bestimmt ist, die Bake (10) unterzubringen und zu halten, und die einen Befestigungskörper (21) mit einem Saugnapf (22) an seinem unteren Abschnitt umfasst, um die Befestigung (20) an einer gewünschten Oberfläche zu befestigen, wobei der Befestigungskörper (21) ferner ein oberes Gehäuse (23) an seinem oberen Abschnitt umfasst, um die Basis (12) aufzunehmen und zu halten;
wobei das Gehäuse (23) eine Form aufweist, die der Basis (12) entspricht, und das Gehäuse (23) eine abgeschrägte Verengung (24) einschließt, die der Verengung (17) der Basis (12) entspricht;
wobei das Gehäuse (23) aus einem verformbaren Material besteht, das ermöglicht, die Basis (12) der Bake (10) durch einen Formschluss zu halten, der ein Einschieben der Basis (12), die größer ist, durch die im Gehäuse (23) definierte Verengung (24) erzwingt.

2. Leuchtbakenanordnung nach Anspruch 1, **dadurch gekennzeichnet, dass** der Befestigungskörper (21) monolithisch ist, wobei der Saugnapf (22) des unteren Abschnitts und das Gehäuse (23) des oberen Abschnitts in ein einen gleichen Körper integriert sind.

3. Leuchtbakenanordnung nach einem der Ansprüche 1 bis 2, **dadurch gekennzeichnet, dass** der Saugnapf (22) und das Gehäuse (23) koaxial sowie koaxial zur Basis (12) der Leuchtbake (10) konfiguriert sind.

4. Leuchtbakenanordnung nach einem der Ansprüche 1 bis 3, **dadurch gekennzeichnet, dass** die Basis (12) magnetisiert ist.

5. Leuchtbakenanordnung nach einem der Ansprüche 1 bis 4, **dadurch gekennzeichnet, dass** der Saugnapf (22) quer, d. h. in der Draufsicht, in Bezug auf das Gehäuse (23) hervorsteht.

6. Leuchtbakenanordnung nach einem der Ansprüche 1 bis 5, **dadurch gekennzeichnet, dass** der Saugnapf (22) zusätzlich eine Lasche (25) einschließt, um den Saugnapf (22) nach oben zu heben und von der gewünschten Oberfläche zu trennen.

## Revendications

1. Ensemble de balise lumineuse, **caractérisé en ce qu'**il comprend :
- une balise lumineuse (10), qui comprend un logement (11) avec une partie supérieure (13) et une base inférieure (12), et avec un rétrécissement biseauté (17) de la base (12) jusqu'à la partie supérieure (13) ; et
- une fixation de type ventouse (20), destinée à loger et retenir la balise (10), et comprenant un corps de fixation (21), avec une ventouse (22) au niveau de sa partie inférieure, pour fixer la fixation (20) à une surface souhaitée, le corps de fixation (21) comprenant en outre un logement supérieur (23) au niveau de sa partie supérieure, pour loger et retenir la base (12) ;
dans lequel le logement (23) a une forme qui correspond à la base (12), et le logement (23) comprend un rétrécissement biseauté (24) correspondant au rétrécissement (17) de la base (12) ;
le logement (23) est constitué d'un matériau déformable, qui permet à la base (12) de la balise (10) d'être retenue par une fermeture de complémentarité de forme, forçant l'insertion de la base (12), d'une taille plus importante, à travers le rétrécissement (24) défini dans le logement (23).

2. Ensemble de balise lumineuse selon la revendication 1, **caractérisé en ce que** le corps de fixation (21) est monolithique, la ventouse (22) de la partie inférieure et le logement (23) de la partie supérieure étant intégrés dans un même corps.

3. Ensemble de balise lumineuse selon l'une quelconque des revendications 1 à 2, **caractérisé en ce que** la ventouse (22) et le logement (23) sont conçus de manière coaxiale, ainsi que de manière coaxiale avec la base (12) de la balise (10).

4. Ensemble de balise lumineuse selon l'une quelconque des revendications 1 à 3, **caractérisé en ce que** la base (12) est magnétisée.

5. Ensemble de balise lumineuse selon l'une quelconque des revendications 1 à 4, **caractérisé en ce que** la ventouse (22) fait saillie transversalement, à savoir, lorsque vue en plan, par rapport au logement (23).

6. Ensemble de balise lumineuse selon l'une quelconque des revendications 1 à 5, **caractérisé en ce que** la ventouse (22) comprend en outre une languette (25), pour soulever et séparer la ventouse (22) de la surface souhaitée.
